# EUROPEAN PATENT SPECIFICATION

(11) **EP 1 839 493 B1**
(45) Date of publication and mention of the grant of the patent: **28.12.2011**
(21) Application number: 07104150.3
(22) Date of filing: 14.03.2007
(51) Int. Cl.: A23D 9/00, A23D 9/007, A23D 9/02

(54) **Oil composition of conjugated linoleic acid**
Ölzusammensetzung aus konjugierter Linolsäure
Composition d'huile d'acide linoléique conjugué

(30) Priority: 14.03.2006 US 375162
(43) Date of publication of application: 03.10.2007
(73) Proprietor: Bunge Oils, Inc, St. Louis, MO 63146 (US)
(72) Inventor: Nakhasi, Dilip K., Bourbonnais, IL 60914 (US); Daniels, Roger L., Manhattan, IL 60442 (US); Corbin, Danielle N., Richton Park, IL 60471 (US)
(74) Representative: Jones Day

(56) References cited:
- US-A- 6 124 486
- US-A1- 2005 196 512
- VILLENEUVE ET AL: "Chemoenzymatic synthesis of structured triacylglycerols with conjugated linoleic acids (CLA) in central position" FOOD CHEMISTRY, ELSEVIER SCIENCE PUBLISHERS LTD, GB, vol. 100, no. 4, 2007, pages 1443-1452, XP005589588 ISSN: 0308-8146
- HALLDORSSON A ET AL: "Chemoenzymatic synthesis of structured triacylglycerols" TETRAHEDRON LETTERS, ELSEVIER, AMSTERDAM, NL, vol. 42, no. 43, 22 October 2001 (2001-10-22), pages 7675-7677, XP004307974 ISSN: 0040-4039
- TORRES C F ET AL: "Lipase-mediated transesterification of menhaden oil with the ethyl ester of conjugated linoleic acid: multi-response kinetics" BIOCHEMICAL ENGINEERING JOURNAL, ELSEVIER, AMSTERDAM, NL, vol. 23, no. 2, April 2005 (2005-04), pages 107-116, XP004733294 ISSN: 1369-703X
- ZHENG GUO, YAN SUN: "Solvent-free production of 1,3-diglyceride of CLA: Strategy consideration and protocol design" FOOD CHEMISTRY, vol. 100, no. 3, 2007, pages 1076-1084, XP002445881 ISSN: 0308-8146
- DATABASE WPI Week 200427 Derwent Publications Ltd., London, GB; AN 2004-288991 XP002445764 & JP 2004 091487 A (NISSHIN OIL MILLS LTD) 25 March 2004 (2004-03-25) & JP 2004 091487 A (RINORU OIL MILLS CO LTD; NAGAO HISAHIRO) 25 March 2004 (2004-03-25)
- MU ET AL: "The metabolism of structured triacylglycerols" PROGRESS IN LIPID RESEARCH, PERGAMON PRESS, PARIS, FR, vol. 44, no. 6, November 2005 (2005-11), pages 430-448, XP005163132 ISSN: 0163-7827
- ST-ONGE M-P ET AL: "CONSUMPTION OF A FUNCTIONAL OIL RICH IN PHYTOSTEROLS AND MEDIUM-CHAIN TRIGLYCERIDE OIL IMPROVES PLASMA LIPID PROFILES IN MEN" JOURNAL OF NUTRITION, WISTAR INSTITUTE OF ANATOMY AND BIOLOGY, PHILADELPHIA, PA,, US, vol. 133, no. 6, 2003, pages 1815-1820, XP002331081 ISSN: 0022-3166

## Description

### Background of the Invention

This invention relates to compositions of conjugated linoleic acid. More particularly, this invention relates to oil compositions containing conjugated linoleic acid in which the conjugated linoleic acid has improved stability. This invention further relates to a method of making such oil compositions containing linoleic acid in which the conjugated linoleic acid has improved stability.

Vegetable-based edible oil compositions long have been used in baking, frying and food dressing applications. Edible oil products provide taste, nutrition and anti-stick properties for any number of pan cooking, baking, dressing or similar types of uses and applications. Edible oil products of this general type include liquid oils, cooking oils, margarines, whipped spreads, tub margarines, shortenings, oils, sprayable compositions, salad dressings and the like. Edible oils also can be included in compositions administered to individuals in compositions that are not necessarily mainstream food products. Some can be directed to fine tuning nutritional input or addressing metabolism objectives. Traditional edible oil products, including those of the long chain variety, have been used in these types of applications.

Fats are made of fatty acids attached to a three-carbon glycerol backbone. Fatty acids are made up of chains of carbon atoms with a terminal carboxyl group. The carboxyl groups can attach to one, two, or three of the hydroxyl groups on the glycerol backbone to form mono-, di-, or tri-acylglycerols, or fats. The functional and nutritional qualities of the fats will depend on a variety of factors including whether it is a mono-acylglycerol (MAG), a diacylglycerol (DAG) or a triacylglycerol (TAG); the number of carbons in the fatty acid chains; whether the chains are saturated, mono-unsaturated, or poly-unsaturated; whether any unsaturated double bonds in the chains are in the form of the cis or trans isomer; the location of any double bonds along the chain; and the positions of the different types of fatty acids relative to the three carbons of the glycerol backbone.

Conjugated linoleic acid (CLA) is a fatty acid having 18 carbon atoms and two double bonds in the chain, the two double bonds being separated from one another along the chain by one single bond in the chain. While several different isomers of CLA have been identified, the major isomers have their double bonds at the following three positions in the carbon chain, with either the cis or trans conformation: 9 and 11,10 and 12, and 11 and 13. CLA is found naturally in dairy products and meat derived from ruminant animals. CLA also can be synthesized from vegetable oils.

Researchers have claimed that CLA's are associated with a variety of health benefits including increased production of lean body mass; reduction of body fat composition; promotion of cell-mediated immune response; and lowering of insulin resistance. Thus, there have been attempts to increase the use of CLA's in manufactured food products such as liquid oils, cooking oils, margarines, whipped spreads, tub margarines, shortenings, oils, sprayable compositions, salad dressings and the like. This has proven to be a challenge, because of the high susceptibility of CLA's to oxidation. Exposure to either heat or light can cause oxidation, turning the fat rancid.

Interesterification is a known reaction of triacylglycerol structures whereby individual fatty acid structures at positions of the triglyceride being interesterified are interchanged on the glycerol moiety. This is at times referred to or recognized as a randomization wherein fatty acid moieties from one glycerol component of a triacylglycerol are exchanged with those of a glycerol component of another triacylglycerol. This results in triacylglycerol structures which have interchanged fatty acid moieties that vary from glycerol structure to glycerol structure. Art in this area includes Pelloso et al. U.S. Pat. No. 5,434,278, Doucet U.S. Pat. No. 5,908,655, Cherwin et al. U.S. Pat. No. 6,124,486 and Liu et al. U.S. Pat. No. 6,238,926.

The art of interesterification has developed to form, for example, triglyceride compositions which provide certain melt profiles that can be of interest in certain applications. Generally these are recognized herein as "structured lipids" in order to help distinguish the interesterified products from other products which are physical blends of the same components but that have not been subjected to interesterification.

One example of a more healthful oil composition is disclosed in United States Application Serial No. 795,843, filed March 8, 2004, published September 8, 2005 publication number 20050196512, the disclosure of which is incorporated herein by reference in its entirety. That application discloses products that can be used in place of, or in combination with, conventional edible oil products such as domestic oils or tropical oils. The disclosed products are compositions of specially constructed edible oils in combination with a phytosterol ester component. The products have as a principal component a structured lipid which is a product of the interesterification of an edible domestic oil triglyceride and a medium chain triglyceride. These structured lipids can be combined with phytosterol esters into so-called healthy oil compositions. When desired, these compositions can be formulated with components of a type typically included within compositions for a selected intended use.

It is thus an object of the invention to provide a method of incorporating CLA's into manufactured food products in which the CLA is in a stabilized form that will be resistant to undesired oxidation.

It is another object of the invention to provide a manufactured food product having one or more CLA's incorporated therein wherein the CLA is in a stabilized form that will be resistant to undesired oxidation.

It is another composition to provide an oil composition suitable for use in a manufactured food product, the oil composition having incorporated therein one or more CLA's in a stabilized form that will be resistant to undesirable oxidation.

### SUMMARY OF THE INVENTION

In accordance with the present invention, products are provided which can be used in place of, or in combination with, conventional edible oil products such as domestic oils or tropical oils. These products are compositions of specially constructed lipid components including conjugated linoleic acid, which can be used alone or blended with another edible oil, and optionally in combination with a phytosterol ester component. The structured lipid is a product of the interesterification of an edible domestic oil triglyceride, a medium chain triglyceride, and conjugated linoleic acid. These structured lipids optionally can be combined with phytosterol esters into so-called healthy oil compositions. When desired, these compositions can be formulated with components of a type typically included for a selected intended use.

An oil composition in accordance with the present invention comprises an interesterified structured lipid component; the structured lipid component being a reaction product of an interesterification reactant charge, said reactant charge comprising (i) an amount of a medium chain triglyceride having fatty acid chains from C6 to C 12 in length, (ii) an amount of a long chain domestic oil having fatty acid chains of at least C16 in length, and (iii) an amount of one or more isomers of conjugated linoleic acid. The oil composition optionally comprises a phytosterol ester component, and optionally one or more other edible oils.

The structured lipid compositions of the present invention have the ability to function well in food systems, especially for baking, sauteing, stir-frying and as an oil component of a dressing or other product that is used and/or stored at room temperature or refrigerated temperatures. By virtue of this good functionality of these compositions, the health, nutritional and positive metabolic benefits of the optional phytosterols, medium chain triacylglycerols, and conjugated linoleic acid are provided in traditional products which are likely to be more readily consumed by those who can benefit from the health attributes of the components.

A general aspect or object of the present invention is to provide compositions which combine structured lipids including conjugated linoleic acid with optional phytosterol esters to provide compositions suitable for health and nutrition promotion in individuals.

An aspect or object of the present invention is that it provides medium chain triglycerides and conjugated linoleic acids which have been modified by longer chain edible oils, for the purpose of enhancing health and/or nutrition of products within which they are optionally combined with phytosterol esters.

Another aspect or object of this invention is that it provides structured lipids containing conjugated linoleic acid and that are very suitable for use in edible oil compositions which can be liquid and clear at room temperature and below, optionally in combination with phytosterol esters.

Another aspect or object of the present invention is providing a process for accomplishing randomized interesterification of medium chain edible oils and conjugated linoleic acid with long chain edible oils, and the use of the resulting product in compositions for health and/or nutrition promotion in a form which facilitates consumption for reaping the benefits of the composition in humans or other mammals.

Another aspect or object of this invention is that it provides an improved composition and method which combines the virtues of MCT technology and conjugated linoleic acid technology, and phytosterol technology with the special improvement of interesterification of the conjugated linoleic acid for enhancing compatibility and shelf stability of compositions which exhibit excellent suitability for use in food products and preparations, optionally with a phytosterol ester component.

Other aspects, objects and advantages of the present invention will be understood from the following description according to the preferred embodiments of the present invention, specifically including stated and unstated combinations of the various features which are described herein.

### DETAILED DESCRIPTION OF THE INVENTION

As required, detailed embodiments of the present invention are disclosed herein; however, it is to be understood that the disclosed embodiments are merely exemplary of the invention, which may be embodied in various forms. Therefore, specific details disclosed herein are not to be interpreted as limiting, but merely as a basis for the claims and as a representative basis for teaching one skilled in the art to variously employ the present invention in virtually any appropriate manner.

The present invention is directed toward structured lipids produced from medium chain triglycerides, a domestic oil, and conjugated linoleic acid.

Medium chain triglycerides usually are produced commercially by splitting and distilling fatty acids from coconut or palm kernel oils. Production includes esterification with glycerine to form a triglyceride having fatty acid chain lengths of from C6 to C12. These known edible oils typically contain 50 to 80 weight percent of C8 caprylic fatty acids and between about 20 and about 50 weight percent of C10 capric fatty acids. Minor levels, typically between about 1 and about 2 weight percent, of either or both of C6 caproic fatty acids and C12 lauric fatty acids can be present in some such products.

Known medium chain triglyceride, or "MCT" products include some NEOBEE.®. products such as NEOBEE®. M-5 (trademark and product of Stepan Company), Aldo MCT (trademark and product of Lonza Inc.), CAPTEX® 300 (trademark and product of Abitec Corp.), and MIGLYOLO 812 (trademark and product of Clionova, Inc.).

Traul et al., "Review Of The Toxicologic Properties Of Medium-Chain Triglyceride", Food and Chemical Toxicology, 38, pages 79-98 (2000) indicate that MCTs are essentially non-toxic in acute toxicity tests conducted in several species of animals. This article also indicates that MCTs exhibit virtually no ocular or dermal irritant potential, even with prolonged eye or skin exposure. This article also indicates that MCTs exhibit no capacity for hypersensitivity induction. According to this publication, the safety of MCTs in human dietary consumption has been indicated up to levels of 1 gram per kilogram of body weight.

It has been noted that MCTs result in lower fat deposition when compared with long chain triglycerides; Ingale et al., "Dietary Energy Value of Medium-Chain Triglycerides", Journal of Food Science, Volume 64, No. 6, pages 960-963 (1999). Conclusions reached in this article state that differences in energy utilization show that increments of heat associated with the metabolism of MCTs appears to be about 16% higher as compared to long chain triglycerides. With this in mind, the calculated mean net caloric energy value for MCTs used in diets is on the order of 6.8 kca1/g. This is lower than typical LCTs. According to the publication, substituting MCTs for LCTs as the source of fat in diets results in reduced weight gain and reduced fat deposition in laboratory animals and humans. This is said to be due to the lower gross energy density of an efficient utilization of energy from MCTs.

From this information, medium chain triglycerides are indicated as having dietary advantages at least from the point of view of fat deposition. Medium chain triglycerides also are indicated by art such as this as being suitable for use in the context of human food applications. MCTs however have relatively low viscosities, making them less than satisfactory for some uses.

Also part of the charge for forming the structured lipids are so-called domestic oils. Domestic oils for the interesterification according to the invention include soybean oil, corn oil, cottonseed oil, canola oil, safflower oil, sunflower oil, peanut oil, olive oil, oil from grain plants, and identity preserved oils such as identity preserved canola oil and the like. Whichever edible oil is chosen, it will be a liquid oil. Hydrogenation typically need not be carried out. Oils of these types are well recognized as so-called long chain lipids. Chain lengths of these oils generally lie between C16 and C22, as will be generally appreciated in the art.

With further reference to the domestic oils having chain lengths longer than the MCT reactant, advantageously they are preferably substantially unsaturated oils such as soybean, corn, cottonseed and canola, which are well known in the art as liquid oil commodities. Certain specialty oils also are encompassed within the preferred domestic oils. These include identity preserved canola oils and refined, bleached and deodorized high stable oils. One such suitable oil is a low-linolenic acid soybean oil sold under the trademark Nutrium®, available from Bunge Du-Pont Biotech Alliance, St. Louis, Missouri. Further, Sornyk et al U.S. Pat. No. 5,965,755 and Lanuza et al. U.S. Pat. No. 6,169,190 are noted and incorporated herein by reference.

Also part of the charge for forming the structured lipids are one or more isomers of conjugated linoleic acid. Methods of synthesizing conjugated linoleic acid are described, for example, in U.S. 5,892,074 and U.S. 6,410,761. Bioactive conjugated linoleic triglycerides are disclosed in U.S. 6,608,222. The conjugated linoleic acids as used in the present invention are in the glyceride form, either as the diacylglycerol, or more preferably as the triacylglycerol. Conjugated linoleic acid acylglycerol products suitable for use in compositions of the present invention include a triglyceride product sold under the name Tonalin® CLA by Cognis Corporation and a diglyceride product sold under the name Neobee® CLA 80 DG by Stepan Corporation of Northfield, Illinois.

The conjugated linoleic acid acylglycerols can be added to the interesterification charge in quantities up to about 20% by weight based on the total weight of the esterification charge. Preferred quantities of conjugated linoleic acid acylglycerols are about 5%, about 10%, about 15% and about 20%, all determined as weight percent based on total weight of the esterification charge. At the present time, about 20% by weight is most preferred.

The balance of the interesterification charge will comprise the MCT and domestic oil components. The ratio of these two components can range from about 1:5 to about 5:1, will preferably be in the range of about 1:3 to about 3:1, and most preferably the two components will be present in about equal amounts.

The chemical interesterification used in making the structured lipids of the compositions of the invention involves charging the reactants into an interesterification reactor vessel. Such vessels have means for heating the reactants during agitation and under reduced pressure or vacuum conditions. The reaction is carried out in the presence of a suitable interesterification catalyst and typically proceeds rapidly to completion or substantial completion. Typically, the interesterification is a reaction to or toward complete randomization, which would equate to a degree of interesterification of 100% of the fatty acyl chains.

Interesterification catalysts include metal alkoxides, alkali metals, alkali metal alloys, and metal hydroxides. Alkoxides include alkali metal alkoxides, such as sodium methoxide, sodium ethoxide, potassium methoxide and potassium ethoxide. Alkali metals include sodium. Alkali metal alloys include sodium/potassium alloy, and metal hydroxides include alkali metal hydroxides such as sodium hydroxide and potassium hydroxide. The catalyst is present as less than 1% by weight of the interesterification mixture, preferably less than 0.5%, and most preferably less than 0.2%.

Once the interesterification has proceeded to form the desired structured lipid, steps can be taken to modify the conditions away from reaction conditions. This can include inactivating the catalyst, reducing the temperature, reducing the vacuum applied, ceasing agitation, or any combination of these changes. Means for accomplishing these changes will be appreciated by those skilled in the art.

Reaction temperatures range between about 85° C and about 92° C (about 185° F to about 197° F). A most suitable temperature at which to carry out the interesterification within the reaction vessel is approximately midway within this range. Vacuum conditions within the vessel range between about 5 mbar and about 100 mbar (between about 4 mm Hg and about 75 mm Hg). Preferably, the pressure level is within the lower portion of this range, or less than about 40 mbar (about 30 mm Hg), most preferably at or below about 26.7 mbar (about 20 mm Hg).

Reaction time will range between about 30 minutes and about 2 hours. An especially suitable reaction time is about 45 minutes. This reaction time can be controlled, for example, by timed neutralization of the catalyst. Neutralization of a catalyst such as sodium methoxide can be accomplished with 0.7 weight percent of citric acid solution of 42% strength. The duration of the neutralization phase is preferably about 20 minutes, although longer or shorter times may be used depending upon the particular reactants and catalyst used.

The interesterified structured lipid can be treated to remove any residual soaps and/or to remove all the color bodies if needed. These include filter aids and silica sources such as TRISYL.®. S-615 (trademark, available from W. R. Grace & Co.) used for the refining of vegetable oil. Color removal can be with a bleaching earth or the like. The structured lipid also typically will be subjected to deodorization in accordance with approaches generally known in the art.

In preparing the products according to the invention, the interesterified structured lipid can be combined with one or more phytosterol esters to form a composition which can be used directly as an edible oil product, or also be combined with other components to make up the desired final product, as will be generally appreciated by those skilled in the art. For example, this can include combining the composition with one or more other edible oils and other food components in recipes for consumable foods and the like.

Where an optional phytosterol ester component is used, compositions according to the invention can include the structured lipid at levels between about 88 and about 98 weight percent, based upon the total weight of the product; preferably in the range of between about 90 and about 96 weight percent; and most preferably between about 92 and about 94 weight percent. The phytosterol ester component will be included at levels between about 2 and about 12 weight percent; preferably between about 4 and about 10 weight percent; and most preferably between about 6 and about 8 weight percent, all based on total weight of the composition. One or more additional edible oils also can be used.

With further reference to the phytosterols that serve as the basis for the phytosterol ester components that are optionally combined with interesterified structured lipid according to the invention, specific details concerning phytosterols can be found in U.S. Pat. No. 6,117,475, No. 6,139,897, No. 6,277,431, US Patent Application Publications No. 2002/0031595 and No. 2002/0045000, and International Publications No. WO 01/13733, No. WO 01/32029 and No. WO 01/91587. Specific details concerning phytosterol esters and microparticles of phytosterol esters are found in U.S. Pat. No. 6,087,353 and U.S. Patent Application Publication No. 2002/0048606. As noted previously, each of these patents and patent publications is incorporated by reference hereinto.

The term "phytosterols" when referring to the components that can be used in the compositions according to the present invention encompass phytosterols and/or phytostanols or derivatives of these types of compounds. It is recognized that the presence of the sterol component is useful in lowering serum cholesterol and serum triglyceride levels, as well as enhancing overall dietary efficacy. It is generally accepted, but not with certainty, that this can be explained by similarities between their respective chemical structures. By this explanation, the phytosterol displaces cholesterol from the micellar phase, thereby reducing cholesterol absorption and/or competing with receptor and/or carrier sites in the cholesterol absorption process.

Examples of compounds which fall within a meaning of "phytosterol" include sitosterol, campesterol, stigmasterol, brassicasterol, demosterol, chalinosterol, poriferasterol, coioanasterol, and natural or synthesized forms or derivatives, including isomers. Also included are compounds identified by the term phytostanol, including saturated or hydrogenated phytosterols and all natural or synthesized forms and derivatives, including the isomers. It will be appreciated that these components can be modified, such as by adding side chains, and also fall within the purview of the term phytosterol.

Phytosterols are typically attained from natural sources, most typically from the processing of plant oils. Sources include corn oil, wheat germ oil, soy extract, rice extract, rice bran, canola oil and sesame oil, walnut oil, other nut oils, peanut oil, and all vegetable source oils. Other sources can include tall oil pitch or soap such as those which are byproducts of the forestry industry, which are called wood sterols.

Phytosterol esters are available from public sources, including from Forbes Medi-Tech, Inc. An example is the phytosterol product sold under the name REDUCOL®, a registered trademark of Forbes Medi-Tech, Inc. Compositions are sold under this brand name as cholesterol lowering agents. A typical such composition is composed of plant sterols and stanols having 14.5% campesterol, 2.4% campostanol, 50.9% beta-sitosterol, and 18.9% sitostanol. The REDUCOL® product is a fine crystalline waxy powder. Its particle size characteristic is such that greater than 80% of the particles pass through a 0.8 mm sieve and greater than 98% of the particles pass through a 2.0 mm sieve. PHYTROL®. phytosterol compositions comprise from 38 to 79 weight percent sitosterol, based on the total weight of the anhydrous composition, 4 to 25 weight percent of campesterol, 6 to 18 weight percent sitostanol, and 0 to 14 weight percent campostanol. At least 97 weight percent of the components are in the form of a sterol ester, and no more than 3 weight percent are free sterols. An exemplary sterol ester in this regard is a phyto-S-sterol-10 ester. Such has a softening point of between 15° C and 30° C and is substantially insoluble in water at 25° C. Such a sterol ester is liquid above 40° C.

With more particular reference to the phytosterol ester component, it is preferred that the quantity of stanol structures included in this component be minimized. The stanol structure associated with hydrogenization is associated with trans-isomer structures, which have been the subject of negative health concerns. In addition, excessive hydrogenization detrimentally affects clarity of the compositions. Typically, the stanol or phytostanol content in the phytosterol ester components according to the invention will be no greater than about 20 weight percent, based upon the total weight of the phytosterol ester component. Preferably, the amount of stanol or phytostanol compounds within the phytosterol ester component is not greater than about 15 weight percent.

In proceeding with a method for making the compositions according to the invention, for those embodiments which include a phytosterol ester component, between about 88 and about 98 weight percent of the interesterified structured lipid described herein is blended with between about 2 and about 12 percent of a phytosterol ester component, both based upon the total weight of the composition. Typically, the interesterified structured lipid is at between about 90 and about 96 weight percent, and the phytosterol ester is at between about 4 and about 10 weight percent. In a preferred arrangement, the structured lipid is prepared by an interesterification reaction as discussed herein of a conjugated linoleic acid with approximately equal weight percentages of a medium chain triglyceride and of a long chain domestic oil, each as generally discussed herein. One or more other edible oils also may be included in the composition.

These compositions then are formulated into food products to provide stabilized conjugated linoleic acid and, where phytosterol esters are used, to provide adequate levels of phytosterols delivered into the body in order to reduce total cholesterol adsorption. In addition, the MCT structure fosters their oil metabolism through the hepatic system rather than through the lymphatic system, leading to reduced adipose tissue deposition for these oil products when compared with products incorporating similar quantities of other oils. The compositions also are intended to increase components of energy expenditure and substrate oxidation. In addition, the conjugated linoleic acid is believed to provide unique health benefits. Advantageously, the conjugated linoleic acid is stabilized when interesterified as described above, so that such food products will have a greater CLA efficacy than if made using non-interesterified conjugated linoleic acid.

This structured lipid of conjugated linoleic acid, medium chain triacylglycerols, and domestic oils, optionally combined with phytosterol esters as discussed herein, provide an excellent composition for edible oil products having good clarity, physical properties for such uses, and low trans-isomer levels. This composition provides a healthy oil that delivers salad oil, pan frying and baking functionality while serving as an adjunct to lower LDL cholesterol levels and minimizing adipose tissue deposition plus health benefits directly associated with the presence of CLA's.

Administration of the structured lipid-based, phytosterol ester-containing oil composition according to the invention can be made at advantageous levels when included within a monitored diet. Administration doses should be at least about 0.4 grams of the oil composition per kilogram of body weight per day. A typical range is between about 0.8 and about 1 gram of this oil per kilogram of body weight per day. In an exemplary monitored diet, 40% of the total energy (approximated by calories) in the diet originate from fat, 45% of the energy from carbohydrates, and 15% of the energy from protein sources. Of the fat source, 70% can be provided by the structured lipid composition. Thus, a monitored diet designed for lowering LDL cholesterol, raising HDL cholesterol and/or raising the HDL/LDL cholesterol level in this example achieves 28% of its energy from the structured lipid-based compositions, optionally with phytosterol esters, according to the invention.

On a body mass basis, this type of monitored diet expends energy sources at a rate of between about 2200 and about 2500 calories per day. The structured lipid-based oil compositions with optional phytosterol esters according to the invention exhibit 8.4 kilocalories per gram of fat, whereas a typical edible oil such as refined, bleached and deodorized canola oil exhibits 9 kilocalories per gram of fat.

The following examples present certain embodiments of the invention and are intended by way of illustration and not by way of limitation. In each of the examples herein, percentages indicate weight percent of the total mixture, unless otherwise indicated.

### Examples 1-10

In each of examples 1-10, an interesterification charge of Nutra-Clear HS®, canola oil (lot # 40606CRC200390), Medium Chain Triacylglycerols (Neobee® 1053 lot # L-7056090K) and conjugated linoleic acid (Cognis Corporation) was placed in an interesterification reaction chamber along with 0.125% be weight of 95% pure sodium methoxide powder, in the proportions set forth in Table 1 below. The chamber was brought to a temperature of 85°C-92°C (185°F-197°F) with a target temperature of 88°C (191°F). The reaction was run under a vacuum (about 4-75 mmHg, preferably about 18-22 mmHg) for approximately 45 minutes. The reaction mixture was then neutralized with 0.7% by weight percent of the total reaction mixture of 42% citric acid; neutralization continued for about 20 minutes. The neutralized reaction charge was then treated with 0.5-2.0 weight percent Trisyl S-615 and 0.5-2.0% filter aid at 90°C-94°C (194°F-201°F), with mixing for about 10 minutes to remove soaps. The percentage of Trisyl S-615 and filter aid each increased by 0.5% increments as the amount of CLA used increased by 5% increments. Following the removal of soaps, the reaction mixture was treated with 0.5% bleaching earth and 0.5-2.0% filter aid to remove color bodies. The reaction mixture was then subjected to a deodorization step by being maintained at a temperature of 214°C - 226°C (417.2°F - 438.8°F) under a vacuum of about 0.114-0.870 mbar for about 4 hours. The deodorization temperature was lower than is typical for such reaction products, due to the volatility of the CLA components. Three runs were made of each of examples 1-8 (indicated as a, b, c) and one run was made of each of examples 9 and 10.

**Table 1**

| Example # | CLA-DAG (gms) | CLA-TAG (gms) | MCT (gms) | Canola (gms) |
|---|---|---|---|---|
| 1(a.b.c) | 50 | ----- | 475 | 475 |
| 2(a,b,c) | 100 | ----- | 450 | 450 |
| 3(a.b.c) | 150 | ----- | 425 | 425 |
| 4(a,b,c) | 200 | ----- | 400 | 400 |
| 5(a,b,c) | ----- | 50 | 475 | 475 |
| 6(a,b,c) | ----- | 100 | 450 | 450 |
| 7(a,b,c) | ----- | 150 | 425 | 425 |
| 8(a,b,c) | ----- | 200 | 400 | 400 |
| 9 | ----- | 400 | 800 | 800 |
| 10 | ----- | 700 | 1400 | 1400 |

The interesterification products of each of examples 1-8 above were evaluated to determine the effect of the incorporation of the conjugated linoleic acid in the interesterification reaction on the properties of the products. Properties evaluated were percentage of free fatty acid, peroxide value, smoke point (°F), oxidative stability index, anisidine value, and color. The peroxide value (PV) is determined in accordance with method No. Cd8-53 from the publication Official Methods and Recommended Practices of the AOCS, Fifth Edition (2002). Also found in this publication are method No. Ca5a-40 for free fatty acid (FFA) determination, method No. Cd18-90 for Anisdine Value (AV) determination, and method No. Cd12b-92 for Oxidative Stability Index (OSI) determination. Color measurement was performed with a Lovibond PFX880 5 1/4 color meter. These values were measured at three stages in the process: initially, when the interesterification charge was physically blended but not yet reacted; intermediate, when the interesterification, neutralization, trisyl treatment, and bleaching steps were completed; and final product, when the deodorization step was completed. The values were compared to the standards adopted for the same product without the conjugated linoleic acid, indicated as "Control." The amount of conjugated linoleic acid in each step of the process also was determined. The results in the columns labeled "CLA" and "CLA Isomer" show that the amount of conjugated linoleic acid remained relatively constant during the initial, intermediate, and final stages of the process. This surprising result indicates that the interesterification served to stabilize the CLA, and that these processes were not deleterious to the CLA, i.e. that the CLA was not destroyed or driven off during any of the interesterification, neutralization, or trisyl treatment steps leading to t the intermediate stage, or during the deodorization step leading to the final product. Further, the properties compared favorably to the properties of the Control. It is believed that the properties, and especially the smoke point, could be improved further by using a higher stability canola oil product in the initial interesterifcation charge. Results are set forth in tables 2-9 below. The reported values are the average of the three runs of each example. In each of the tables, the amount of soap is indicated as non-detectable. ("N.D.")

**Table 2**

| Ex. 1: 5% Concentration of CLA-DAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.2 | 410°F | 16.0 | 0.53 | 7.5y/1.3r | N.D. | - | - |
| Initial Blend | 0.22 | 1.2 | 248°F | 9.50 | 0.15 | 7.4y/1.5r | N.D. | 3.70% | 74.0% |
| Intermediate | 0.35 | 0.8 | - | 8.55 | 1.94 | 12.0y/1.5r | N.D. | 3.71% | 74.2% |
| Final | 0.03 | 0.4 | 364°F | 7.90 | 3.8 | 9.9y/1.7r | N.D. | 3.69% | 73.8% |

**Table 3**

| Ex. 2: 10% Concentration of CLA-DAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.2 | 410°F | 16.0 | 0.53 | 7.5y/1.3r | N.D. | - | - |
| Initial Blend | 0.29 | 1.0 | 202°F | 7.45 | - | 8.4y/1.7r | N.D. | 7.44% | 74.0% |
| Interme-diate | 0.38 | 0.8 | - | 7.25 | 0.87 | 9.7y/1.7r | N.D. | 7.33% | 73.3% |
| Final | 0.02 | 0.2 | 352°F | 6.15 | 1.18 | 15.0y/3.4 r | N.D. | 7.67% | 76.7% |

**Table 4**

| Ex. 3: 15 % Concentration of CLA-DAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.2 | 410°F | 16.0 | 0.53 | 7.5y/1.3r | N.D. | - | - |
| Initial Blend | 0.34 | 3.3 | 202°F | 4.68 | | 7.8y/1.7r | N.D. | 11.48 | 76.5% |
| Intermediate | 0.59 | 3.3 | - | 5.25 | 2.20 | 15.5y/3.6r | N.D. | 11.30 | 75.3% |
| Final | 0.03 | 0.5 | 380°F | 5.23 | 2.89 | 35.0y/5.7r | N.D. | 12.75 | 85.0% * |

**Table 5**

| Ex. 4: 20% Concentration of CLA-DAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.2 | 410°F | 16.0 | 0.53 | 7.5y/1.3r | N.D. | - | - |
| Initial Blend | 0.47 | 1.2 | 198°F | 4.00 | - | 7.3y/1.7r | N.D. | 15.23% | 76.2% |
| Intermediate | 0.72 | 2.4 | - | 3.65 | - | 18.0y/4.0r | N.D. | 18.12% | 90.6%* |
| Final | 0.03 | 0.6 | 378°F | 2.95 | 2.07 | 70.0y/11.5r | N.D. | 21.49% | 107.5%* |

| | | | | | | | | | |
|---|---|---|---|---|---|---|---|---|---|
| *Value given is higher due to the possible formation of other isomers that were represented in the analytical data as unknown. | | | | | | | | | |

**Table 6**

| Ex. 5: 5 % Concentration of CLA-TAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.20 | 410°F | 16.0 | 0.53 | 7.5y/1.3r | N.D. | - | - |
| Initial Blend | 0.06 | 3.8 | 346°F | 9.13 | 1.08 | 3.7y/0.4r | N.D. | 3.54% | 70.8% |
| Intermediate | 0.35 | 2.7 | - | 7.45 | 0.52 | 13.7y/1.6r | N.D. | 3.70% | 74.0% |
| Final | 0.03 | 0.4 | 376°F | 8.73 | 1.18 | 10.0y/1.8r | N.D. | 3.67% | 73.4% |

**Table 7**

| Ex. 6: 10% Concentration of CLA-TAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.20 | 410°F | 16.0 | 0.53 | 7.5y/1.3r | N.D. | - | - |
| Initial Blend | 0.09 | 4.06 | 327°F | 6.51 | 1.73 | 3.5y/0.4r | N.D. | 7.33% | 73.3% |
| Intermediate | 0.35 | 2.87 | - | 5.88 | 1,41 | 12.3y/1.6r | N.D. | 7.36% | 73.6% |
| Final | 0.04 | 2.07 | 371°F | 5.98 | 0.79 | 9.0y/1.6r | N.D. | 7.52% | 75.2% |

**Table 8**

| Ex. 7: 15 % Concentration of CLA-TAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.20 | 410°F | 16.0 | 0.53 | 7.5y/1.3r | N.D. | - | - |
| Initial Blend | 0.13 | 4.77 | 330°F | 5.13 | 1.85 | 3.4y/0.4r | N.D. | 10.90% | 72.6% |
| Intermediate | 0.43 | 2.80 | - | 5.08 | 1.56 | 10.2y/1.4r | N.D. | 11.31% | 75.4% |
| Final | 0.05 | 2.87 | 385°F | 4.53 | 1.93 | 9.0y/1.9r | N.D. | 11.33% | 75.5% |

**Table 9**

| Ex. 8: 20% Concentration of CLA-TAG | | | | | | | | | |
|---|---|---|---|---|---|---|---|---|---|
| | FFA | PV | Smoke Pt. | OSI | AV | Color | Soap | CLA | CLA Isomer |
| Control | 0.03 | 0.20 | 410°F | 16.0 | 0.53 | 7.5y/1.3r | N.D. | - | - |
| Initial Blend | 0.16 | 5.73 | 336°F | 4.60 | 2.71 | 3.5y/0.4r | N.D. | 14.66% | 73.3% |
| Interme-diate | 0.40 | 4.33 | - | 3.98 | 2.90 | 12.0y/1.5r | N.D. | 14.90% | 74.5% |
| Final | 0.03 | 3.67 | 368°F | 4.67 | 3.00 | 9.9y/1.7r | N.D. | 14.82% | 74.1% |

### Examples 11-22

Quantities of the products of Examples 9 and 10 were subdivided into twelve samples. Each of the samples was blended with an amount of phytosterol ester (Forbe Medi Tech, Inc.), such that there were three 200 gram samples with phytosterol in the amount of 4%, three 200 gram samples with phytosterol in the amount of 6%, three 200 gram samples with phytosterol in the amount of 8%, and three 200 gram samples with phytosterol in the amount of 10%. Each of these samples was maintained at a pre-determined temperature and evaluated for stability over a period of many weeks. Ambient temperature is within an open room having typical heating, ventilation and air conditioning cycles averaging on the order of about 70°F. Results are set forth in the tables below.

### Ex. 11: 4% Phytosterol Ester at Ambient temp.

| | Week | Week | Week | Week | Week | Week | Week | Week | Week |
|---|---|---|---|---|---|---|---|---|---|
| | 1 | 2 | 3 | 4 | 5 | 6 | 7 | 8 | 9 |
| Transparent | + | + | + | + | + | + | + | + | + |
| Cloudy | - | - | - | - | - | - | - | - | - |
| Precipitate | - | - | - | - | - | - | - | - | - |
| Separation | - | - | - | - | - | - | - | - | - |
| Yellow Hue | + | + | + | + | + | + | + | + | + |

### Ex. 12: 4% Phytosterol Ester at 50° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | - | - | - | - | - | - | - |
| Separation | - | - | - | - | - | - | - |
| Yellow Hue | + | + | + | + | + | + | + |

| | | | | | | | |
|---|---|---|---|---|---|---|---|
| ("+" means present. "-" means not present.) | | | | | | | |

### Ex. 13: 4% Phytosterol Ester at 40° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | - | - | - | - | - | + | + |
| Separation | - | - | - | - | - | - | - |
| Yellow Hue | + | + | + | + | + | + | + |

### Ex. 14: 6% Phytosterol Ester at Ambient temp.

| | Week | Week | Week | Week | Week | Week | Week | Week | Week |
|---|---|---|---|---|---|---|---|---|---|
| | 1 | 2 | 3 | 4 | 5 | 6 | 7 | 8 | 9 |
| Transparent | + | + | + | + | + | + | + | + | + |
| Cloudy | - | - | - | - | - | - | - | - | - |
| Precipitate | - | - | - | - | - | - | - | - | - |
| Separation | - | - | - | - | - | - | - | - | - |
| Yellow Hue | + | + | + | + | + | + | + | + | + |

### Ex. 15: 6% Phytosterol Ester at 50° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | - | - | - | - | - | - | - |
| Separation | - | - | - | - | - | - | - |
| Yellow Hue | + | + | + | + | + | + | + |

### Ex. 16: 6% Phytosterol Ester at 40° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | - | - | - | - | - | + | + |
| Separation | - | - | - | - | - | - | - |
| Yellow Hue | + | + | + | + | + | + | + |

| | | | | | | | |
|---|---|---|---|---|---|---|---|
| ("+" means present. "-" means not present.) | | | | | | | |

### Ex. 17: 8% Phytosterol Ester at Ambient temp.

| | Week | Week | Week | Week | Week | Week | Week | Week | Week |
|---|---|---|---|---|---|---|---|---|---|
| | 1 | 2 | 3 | 4 | 5 | 6 | 7 | 8 | 9 |
| Transparent | + | + | + | + | + | + | + | + | + |
| Cloudy | - | - | - | - | - | - | - | - | - |
| Precipitate | - | - | - | + | + | + | + | + | + |
| Separation | - | - | - | - | - | - | - | - | - |
| Yellow Hue | + | + | + | + | + | + | + | + | + |

### Ex. 18: 8% Phytosterol Ester at 50° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | - | - | + | + | + | + | + |
| Separation | - | - | - | - | - | - | - |
| Yellow Hue | + | + | + | + | + | + | + |

### Ex. 19: 4% Phytosterol Ester at 40° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | - | - | - | - | - | - | - |
| Precipitate | + | + | + | + | + | + | + |
| Separation | - | + | + | + | + | + | + |
| Yellow Hue | + | + | + | + | + | + | + |

| | | | | | | | |
|---|---|---|---|---|---|---|---|
| ("+" means present. "-" means not present.) | | | | | | | |

### Ex. 20: 10% Phytosterol Ester at Ambient temp.

| | Week | Week | Week | Week | Week | Week | Week | Week | Week |
|---|---|---|---|---|---|---|---|---|---|
| | 1 | 2 | 3 | 4 | 5 | 6 | 7 | 8 | 9 |
| Transparent | + | + | + | + | + | + | + | + | + |
| Cloudy | - | - | - | - | - | - | - | - | - |
| Precipitate | - | - | + | + | + | + | + | + | + |
| Separation | - | - | - | - | - | - | - | - | - |
| Yellow Hue | + | + | + | + | + | + | + | + | + |

### Ex. 21: 10% Phytosterol Ester at 50° Fahrenheit.

| | Week | Week | Week | Week | Week | Week | Week |
|---|---|---|---|---|---|---|---|
| | 1 | 2 | 3 | 4 | 5 | 6 | 7 |
| Transparent | + | + | + | + | + | + | + |
| Cloudy | + | + | + | +- | - | - | - |
| Precipitate | + | + | + | + | + | + | + |
| Separation | - | - | + | + | + | + | + |
| Yellow Hue | + | + | + | + | + | + | + |

### Ex. 22: 10% Phytosterol Ester at 40° Fahrenheit.

| | Week | Week | Week | Week | Week | Week | Week |
|---|---|---|---|---|---|---|---|
| | 1 | 2 | 3 | 4 | 5 | 6 | 7 |
| Transparent | - | - | - | - | - | - | - |
| Cloudy | + | + | + | + | + | + | + |
| Precipitate | + | + | + | + | + | + | + |
| Separation | + | + | + | + | + | + | + |
| Yellow Hue | + | + | + | + | + | + | + |

| | | | | | | | |
|---|---|---|---|---|---|---|---|
| ("+" means present. "-" means not present.) | | | | | | | |

It may be seen from these results that blends of 4% and 6% phytosterol ester showed no precipitate when maintained at 50°F. for up to seven weeks.

There has been disclosed a novel oil composition comprising an interesterified structured lipid component, the component being an interesterification reaction product of an amount of a medium chain triglyceride, an amount of a long chain domestic oil, and an amount of a conjugated linoleic acid material. Surprisingly, the CLA is stabilized during the interesterification step, such that the level of CLA in the composition remains relatively constant through all steps of the process. The structured lipid component can be used in edible oil compositions. The oil compositions advantageously can contain an amount of a phytosterol ester component, up to about 10 weight percent of the total composition. The oil compositions disclosed herein have good stability and also have other properties useful for an edible oil composition. Those skilled in the art will recognize other variations, modifications, and equivalents of the compositions and methods disclosed herein, all of which are encompassed within the claims hereto.

## Claims

1. An oil composition comprising a randomly interesterified structured lipid component; said structured lipid component being a reaction product of an interesterification reactant charge, said reactant charge comprising (i) an amount of a medium chain triglyceride having fatty acid chains from C6 to C12 in length, (ii) an amount of a long chain domestic oil having fatty acid chains of at least C16 in length, and (iii) an amount of a conjugated linoleic acid material comprising one or more isomers of conjugated linoleic acid.

2. The composition in accordance with claim 1, wherein said structured lipid component comprises at least about 88 weight percent of the oil composition, based upon the total weight of the oil composition.

3. The composition in accordance with claim 1, wherein said structured lipid component comprises at least about 92 weight percent of the oil composition, based upon the total weight of the oil composition.

4. The composition in accordance with any of claims 1 to 3, further comprising an amount of a phytosterol ester.

5. The composition in accordance with any of claims 1 to 4, further comprising one or more additional edible oils.

6. The composition in accordance with any of claims 1 to 5, wherein said amount of conjugated linoleic acid material is present in an amount of about 5 weight percent of the interesterification charge.

7. The composition in accordance with any of claims 1 to 5, wherein said amount of conjugated linoleic acid material is present in an amount of about 10 weight percent of the interesterification charge.

8. The composition in accordance with any of claims 1 to 5, wherein said amount of conjugated linoleic acid material is present in an amount of about 15 weight percent of the interesterification charge.

9. The composition in accordance with any of claims 1 to 5, wherein said amount of conjugated linoleic acid material is present in an amount of about 20 weight percent of the interesterification charge.

10. The composition in accordance with any of claims 1 to 9, wherein said structured lipid component is subjected to deodorization, and said deodorization product has a smoke point of at least about 177°C (at least about 350° F).

11. The composition of any of claims 1 to 10, wherein said at least one isomer of conjugated linoleic acid is present in the form of a diacylglycerol.

12. The composition of any of claims 1 to 10, wherein said at least one isomer of conjugated linoleic acid is present in the form of a triacylglycerol.

13. The composition in accordance with any of claims 1 to 12, wherein said amount of oil comprises an edible carrier component administered to an individual at a level of at least about 0.4 grams of said oil composition per kilogram of body weight per day.

14. The composition in accordance with any of claims 1 to 13, wherein said oil composition is a clear liquid and remains a clear liquid for at least about three months of storage at ambient temperature.

15. The composition in accordance with any of claims 1 to 14, wherein said medium chain triglyceride is selected from the group consisting of caprylic triglyceride, capric triglyceride, and combinations thereof.

16. The composition in accordance with any of claims 1 to 15, wherein said long chain domestic oil is selected from the group consisting of soybean oil, corn oil, cottonseed oil, canola oil, olive oil, peanut oil, safflower oil, sunflower oil, oil from grain plants, and combinations thereof.

17. The composition in accordance with any of claims 1 to 16, wherein the amount of medium chain triglyceride is about equal to the amount of the long chain domestic oil, each measured as weight percent of the charge.

18. The composition in accordance with any of claims 1 to 17, wherein said medium chain triglyceride amount is between about 30 and about 60 weight percent of the interesterification charge, and the amount of the long chain domestic oil is between about 40 and about 70 weight percent of the charge.

19. The composition in accordance with any of claims 1 to 17, wherein said medium chain triglyceride amount is between about 35 and about 55 weight percent of the interesterification charge, and the amount of the domestic oil is between about 45 and about 65 weight percent of the charge.

20. The composition of claim 4 wherein said phytosterol ester component comprises up to about 12 weight percent of the composition, based upon the total weight of the oil composition.

21. A method for making a consumable oil product, comprising:
providing a reactant charge comprising an amount of medium chain triglycerides having carbon chain lengths of between C6 and C12, an amount of domestic oil having carbon chain lengths of between C16 and C22, and an amount of at least one isomer of conjugated linoleic acid; introducing said reactant charge to a reaction location; and randomly interesterifying said reactant charge to form a randomized interesterified structured lipid component, said randomly interesterified structured lipid component being a consumable oil product.

22. The method in accordance with claim 21 wherein said interesterification is catalyzed by a chemical catalyst.

23. The method of claim 22 wherein said catalyst comprises sodium methoxide.

24. The method of any of claims 21 to 23 including the further step of adding a phytosterol ester component to said interesterified structured lipid component to form a consumable oil composition.

25. The method of claim 24 wherein said phytosterol ester component is added in the amount of up to about 12 weight percent of the oil composition, based on the total weight of the oil composition.

## Patentansprüche

1. Eine Ölzusammensetzung, die eine willkürlich interesterifizierte strukturierte Lipidkomponente umfasst, wobei die strukturierte Lipidkomponente ein Reaktionsprodukt eines Interesterifizierungsreaktionsansatzes ist, welcher:
(i) einen Anteil von einem mittelkettigen Triglycerid mit Fettsäureketten in der Länge von C6 bis C12, (ii) einen Anteil von einem langkettigen Haushaltsöl mit Fettsäureketten in der Länge von mindestens C16, und (iii) einen Anteil von einem konjugierten Linolsäure-Material, das eine oder mehrere Isomere der konjugierten Linolsäure beinhaltet, umfasst.

2. Zusammensetzung nach Anspruch 1, wobei die strukturierte Lipidkomponente mindestens etwa 88 Gewichtsprozent der Ölzusammensetzung umfasst, bezogen auf das Gesamtgewicht der Ölzusammensetzung.

3. Zusammensetzung nach Anspruch 1, wobei die strukturierte Lipidkomponente mindestens etwa 92 Gewichtsprozent der Ölzusammensetzung umfasst, bezogen auf das Gesamtgewicht der Ölzusammensetzung.

4. Zusammensetzung nach einem der Ansprüche 1 bis 3, die weiter einen Anteil von Phytosterinester umfasst.

5. Zusammensetzung nach einem der Ansprüche 1 bis 4, die weiter ein oder mehrere zusätzlichen essbaren Öle umfasst.

6. Zusammensetzung nach einem der Ansprüche 1 bis 5, wobei der Anteil des konjugierten Linolsäure-Materials einen Anteil von etwa 5 Gewichtsprozent des Interesterifizierungsansatzes beträgt.

7. Zusammensetzung nach einem der Ansprüche 1 bis 5, wobei der Anteil des konjugierten Linolsäure-Materials einen Anteil von etwa 10 Gewichtsprozent des Interesterifizierungsansatzes beträgt.

8. Zusammensetzung nach einem der Ansprüche 1 bis 5, wobei der Anteil des konjugierten Linolsäure-Materials einen Anteil von etwa 15 Gewichtsprozent des Interesterifizierungsansatzes beträgt.

9. Zusammensetzung nach einem der Ansprüche 1 bis 5, wobei der Anteil des konjugierten Linolsäure-Materials einen Anteil von etwa 20 Gewichtsprozent des Interesterifizierungsansatzes beträgt.

10. Zusammensetzung nach einem der Ansprüche 1 bis 9, wobei die strukturierte Lipidkomponente Desodorierung ausgesetzt ist und das Desodorierungsprodukt einen Rauchpunkt von mindestens etwa 177 °C (mindestens etwa 350 °F) hat.

11. Zusammensetzung nach einem der Ansprüche 1 bis 10, wobei mindestens ein Isomer der konjugierten Linolsäure in Form eines Diacylglycerins vorliegt.

12. Zusammensetzung nach einem der Ansprüche 1 bis 10, wobei mindestens ein Isomer der konjugierten Linolsäure in Form eines Triacylglycerins vorliegt.

13. Zusammensetzung nach einem der Ansprüche 1 bis 12, wobei der Anteil vom Öl, das eine essbare Trägerkomponente umfasst, einem Individuum in einer Höhe von mindestens etwa 0,4 Gramm der Ölzusammensetzung pro Kilogramm Körpergewicht pro Tag verabreicht wird.

14. Zusammensetzung nach einem der Ansprüche 1 bis 13, wobei die Ölzusammensetzung eine klare Flüssigkeit ist und eine klare Flüssigkeit für mindestens etwa drei Monate bei Aufbewahrung bei Raumtemperatur bleibt.

15. Zusammensetzung nach einem der Ansprüche 1 bis 14, wobei das mittelkettige Triglycerid ausgewählt ist aus der Gruppe bestehend aus Capryltriglycerid, Caprintriglycerid und Kombinationen davon.

16. Zusammensetzung nach einem der Ansprüche 1 bis 15, wobei das langkettige Haushaltsöl ausgewählt ist aus der Gruppe bestehend aus Sojaöl, Maiskeimöl, Baumwollsamenöl, Rapsöl, Olivenöl, Erdnussöl, Safloröl, Sonnenblumenöl, Öl aus Getreidepflanzen und Kombinationen davon.

17. Zusammensetzung nach einem der Ansprüche 1 bis 16, wobei der Anteil des mittelkettigen Triglycerids etwa dem Anteil des langkettigen Haushaltsöl entspricht, jeweils nach Gewichtsprozent des Ansatzes bemessen.

18. Zusammensetzung nach einem der Ansprüche 1 bis 17, wobei der Anteil des mittelkettigen Triglycerids zwischen etwa 30 und etwa 60 Gewichtsprozent des Interesterifizierungsansatzes liegt und der Anteil des langkettigen Haushaltsöls zwischen etwa 40 und etwa 70 Gewichtsprozent des Ansatzes liegt.

19. Zusammensetzung nach einem der Ansprüche 1 bis 17, wobei der Anteil des mittelkettigen Triglycerids zwischen etwa 35 und etwa 55 Gewichtsprozent des Interesterifizierungsansatzes liegt und der Anteil des Haushaltsöls zwischen etwa 45 und etwa 65 Gewichtsprozent des Ansatzes liegt.

20. Zusammensetzung nach Anspruch 4, wobei die Phytosterinesterkomponente bis zu 12 Gewichtsprozent der Zusammensetzung umfasst, bezogen auf das Gesamtgewicht der Ölzusammensetzung.

21. Verfahren zur Herstellung eines verbrauchbaren Ölprodukts, das:
Bereitstellen eines Reaktionsansatzes, der einen Anteil von mittelkettigen Triglyceriden mit Kohlenstoffkettenlängen von zwischen C6 und C12, einen Anteil von Haushaltsöl mit Kohlenstoffkettenlängen von zwischen C16 und C22 und einen Anteil von mindestens einem Isomer der konjugierten Linolsäure umfasst; Einführen des Reaktionsansatzes ineine Reaktionsstelle; und willkürliches Interesterifizieren des Reaktionsansatzes, um eine willkürlich interesterifizierte strukturierte Lipidkomponente zu gewinnen, wobei die willkürlich interesterifizierte strukturierte Lipidkomponente ein verbrauchbares Ölprodukt ist, umfasst.

22. Verfahren nach Anspruch 21, wobei die Interesterifizierung von einem chemischen Katalysator katalysiert wird.

23. Verfahren nach Anspruch 22, wobei der Katalysator Natriummethanolat umfasst.

24. Verfahren nach einem der Ansprüche 21 bis 23, das den weiteren Schritt des Zufügens einer Phytosterinesterkomponente zu der interesterifizierten strukturierten Lipidkomponente, um eine verbrauchbare Ölzusammensetzung zu gewinnen, umfasst.

25. Verfahren nach Anspruch 24, wobei die Phytosterinesterkomponente in einer Menge von bis zu 12 Gewichtsprozent der Ölzusammensetzung zugefügt wird, bezogen auf das Gesamtgewicht der Ölzusammensetzung.

## Revendications

1. Une composition d'huile comprenant un composant de lipide structuré interesterifié aléatoirement; ledit composant de lipide structuré étant un produit de réaction d'une charge de réactif d'interestérification, ladite charge de réactif comprenant (i) une quantité d'un triglycéride à chaîne moyenne ayant des chaînes d'acide gras de C6 à C12 en longueur, (ii) une quantité d'une huile domestique à chaîne longue ayant des chaînes d'acide gras d'au moins C16 en longueur et (iii) une quantité d'un matériau d'acide linoléique conjugué comprenant un ou plus isomères d'acide linoléique conjugué.

2. La composition conformément à la revendication 1, où ledit composant de lipide structuré comprend au moins environ 88 pour cent en poids de la composition d'huile, basé sur le poids total de la composition d'huile.

3. La composition conformément à la revendication 1, où ledit composant de lipide structuré comprend au moins environ 92 pour cent en poids de la composition d'huile, basé sur le poids total de la composition d'huile.

4. La composition conformément à l'une quelconque des revendications 1 à 3, en outre comprenant une quantité d'un ester de phytostérol.

5. La composition conformément à l'une quelconque des revendications 1 à 4, en outre comprenant une ou plus huiles comestibles additionnelles.

6. La composition conformément à l'une quelconque des revendications 1 à 5, où ladite quantité de matériau d'acide linoléique conjugué est présente dans une quantité d'environ 5 pour cent en poids de la charge d'interestérification.

7. La composition conformément à l'une quelconque des revendications 1 à 5, où ladite quantité de matériau d'acide linoléique conjugué est présente dans une quantité d'environ 10 pour cent en poids de la charge d'interestérification.

8. La composition conformément à l'une quelconque des revendications 1 à 5, où ladite quantité de matériau d'acide linoléique conjugué est présente dans une quantité d'environ 15 pour cent en poids de la charge d'interestérification.

9. La composition conformément à l'une quelconque des revendications 1 à 5, où ladite quantité de matériau d'acide linoléique conjugué est présente dans une quantité d'environ 20 pour cent en poids de la charge d'interestérification.

10. La composition conformément à l'une quelconque des revendications 1 à 9, où ledit composant de lipide structuré est soumis à désodorisation et ledit produit de désodorisation a un point de fumée d'au moins environ 177°C (au moins environ 350 °F).

11. La composition de l'une quelconque des revendications 1 à 10, où ledit au moins un isomère d'acide linoléique conjugué est présent dans la forme d'un diacylglycérol.

12. La composition de l'une quelconque des revendications 1 à 10, où ledit au moins un isomère d'acide linoléique conjugué est présent dans la forme d'un triacylglycérol.

13. La composition conformément à l'une quelconque des revendications 1 à 12, où ladite quantité d'huile comprend un composant de support comestible administré à un individu à un niveau d'au moins environ 0,4 gramme de ladite composition d'huile par kilogramme de poids corporel par jour.

14. La composition conformément à l'une quelconque des revendications 1 à 13, où ladite composition d'huile est un liquide clair et reste un liquide clair pour au moins environ trois mois de stockage à température ambiante.

15. La composition conformément à l'une quelconque des revendications 1 à 14, où ledit triglycéride à chaîne moyenne est sélectionné du groupe consistant en triglycéride caprylique, triglycéride caprique et des combinaisons de ceux-ci.

16. La composition conformément à l'une quelconque des revendications 1 à 15, où ladite huile domestique à chaîne longue est sélectionnée du groupe consistant en huile de soja, huile de maïs, huile de graine de coton, huile de colza, huile d'olive, huile de cacahuète, huile de carthame, huile de tournesol, huile de plantes à graine et des combinaisons de celles-ci.

17. La composition conformément à l'une quelconque des revendications 1 à 16, où la quantité de triglycéride à chaîne moyenne est environ égale à la quantité de l'huile domestique à chaîne longue, chacune mesurée comme pour cent en poids de la charge.

18. La composition conformément à l'une quelconque des revendications 1 à 17, où ladite quantité de triglycéride à chaîne moyenne est entre environ 30 et environ 60 pour cent en poids de la charge d'interestérification et la quantité de l'huile domestique à chaîne longue est entre environ 40 et environ 70 pour cent en poids de la charge.

19. La composition conformément à l'une quelconque des revendications 1 à 17, où ladite quantité de triglycéride à chaîne moyenne est entre environ 35 et environ 55 pour cent en poids de la charge d'interestérification et la quantité de l'huile domestique est entre environ 45 et environ 65 pour cent en poids de la charge.

20. La composition de la revendication 4, où ledit composant d'ester de phytostérol comprend jusqu'à environ 12 pour cent en poids de la composition, basé sur le poids total de la composition d'huile.

21. Un procédé pour faire un produit d'huile consommable comprenant: mettre à disposition une charge de réactif comprenant une quantité de triglycérides à chaîne moyenne ayant des longueurs de chaîne de carbone d'entre C6 et C12, une quantité d'huile domestique ayant des longueurs de chaîne de carbone d'entre C16 et C22 et une quantité d'au moins un isomère d'acide linoléique conjugué; introduire ladite charge de réactif à un emplacement de réaction; et interestérifier aléatoirement ladite charge de réactif pour former un composant de lipide structuré interestérifié aléatoirement, ledit composant de lipide structuré interestérifié aléatoirement étant un produit d'huile consommable.

22. Le procédé conformément à la revendication 21, où ladite interestérification est catalysée par un catalyseur chimique.

23. Le procédé de la revendication 22, où ledit catalyseur comprend méthoxide de sodium.

24. Le procédé de l'une quelconque des revendications 21 à 23 incluant l'étape supplémentaire d'ajouter un composant d'ester de phytostérol audit composant de lipide structuré interestérifié pour former une composition d'huile consommable.

25. Le procédé de la revendication 24, où ledit composant d'ester de phytostérol est ajouté dans la quantité de jusqu'à environ 12 pour cent en poids de la composition d'huile, basé sur le poids total de la composition d'huile.
